Europäisches Patentamt

European Patent Office

Office européen des brevets

(11) Publication number: **0 269 273**
**B1**

## (12) EUROPEAN PATENT SPECIFICATION

(45) Date of publication of the patent specification:
25.07.90

(51) Int. Cl.⁵: **C21C 5/52**, C21C 5/56

(21) Application number: 87309585.5

(22) Date of filing: 29.10.87

(54) Micro mill continuous steel process.

(30) Priority: 10.11.86 US 928768

(43) Date of publication of application:
01.06.88 Bulletin 88/22

(45) Publication of the grant of the patent:
25.07.90 Bulletin 90/30

(84) Designated Contracting States:
AT BE CH DE ES FR GB GR IT LI LU NL SE

(56) References cited:
DE-A- 2 049 278
DE-A- 2 406 480
DE-A- 3 301 427
DE-C- 527 763

(73) Proprietor: INDUCTOTHERM CORP., 10 Indel Avenue,
Rancocas New Jersey 08073(US)

(72) Inventor: Cignetti, Nicholas P., 4725 Strouble Drive,
Canton Ohio 44718(US)
Inventor: Mortimer, John H., 19 Little John Drive,
Medford New Jersey 08055(US)

(74) Representative: Oliver, Roy Edward et al, Pollak Mercer
& Tench Eastcheap House Central Approach,
Letchworth Hertfordshire SG6 3DS(GB)

ACTORUM AG

## Description

### Scope of the Invention

The present invention is directed to a micro mill continuous steel process. The purpose of this invention is the economic recycling of pre-refined steel, such as but not limited to scrap steel.

### Background of the Invention

Presently, steel scrap is taken from major industrial areas, shipped to remote sites, melted in arc furnaces, either refined in the arc furnace or a ladle metallurgy station and then direct cast into ingots, billets or slabs. The ingot, billets or slabs are then shaped into various end products by conventional rolling or casting means. Additionally, work is being done to develop casters which will continuously cast such end products as rods, wires, sheets and slabs.

Heretofore, the steel industry has used ladle "arc" refining technology as a method for optimizing and increasing the flexibility of the steel production process. The state of ladle "arc" refining furnace technology is set forth in an article by R.J. Fruehan, Professor and Director of CISR, Carnegie-Mellon University, entitled "Ladle Refining Furnaces For The Steel Industry", a report prepared for the Center of Metals Production, in March 1985. In the article, ladle furnaces are described as "not unlike electric arc furnaces", Supra, page 2. Furthermore, the report notes that ladle "arc" furnaces typically range in size from 30-60 tons (a small unit) to 180-240 tons (a large unit). Supra, page 2. The report also notes that it is known to use induction stirring techniques in such ladle "arc" refining furnaces. Supra, Table 4.1.

Induction melting furnaces have been used by the steel foundry industry for approximately 20 years. For example, see the article by R. Duncan entitled "Coreless Induction Melting In Steel Foundries" written for Castell Technical Service of Lopez, Washington. But their application has been limited because at production rates of 100 tons per hour or higher, the furnaces have not proven successful because of their use of 60 cycle current induction technology.

### Summary of the Invention

The present invention is directed to a method for refining steel utilizing induction melting furnaces sized for use in micro mills. The method includes the steps of:

(a) charging a medium frequency induction melting furnace having a maximum production rate of about 50 tons per hour with pre-refined steel and melting the steel in the furnace;

(b) transferring the melted steel to a refining vessel, the refining vessel comprising a vessel having a high freeboard, means for induction heating and stirring, and means for supplying blasts of a gas; and

(c) transferring the refined material to a tundish for a continuous casting operation.

Alternately, the method could include the steps of:

(a) charging a medium frequency induction melting/stirring furnace having a maximum production rate of about 50 tons per hour with pre-refined steel and melting and stirring the steel in said furnace. The furnace comprises a vessel having a high freeboard, means for induction heating and stirring, and means for supplying blasts of a gas; and

(b) transferring the refined material to a tundish for a continuous casting operation.

### Description of the Drawings

For the purpose of illustrating the invention, there is shown in the drawings a form which is presently preferred; it being understood, however, that this invention is not limited to the precise arrangements and instrumentalities shown.

Figures 1-3 when viewed in series illustrate a schematic representation of the equipment utilized in performing the method of the present invention.

Figures 4-5 when viewed in series illustrate a schematic representation of the equipment utilized in performing the alternate method of the present invention.

### Detailed Description of the Invention

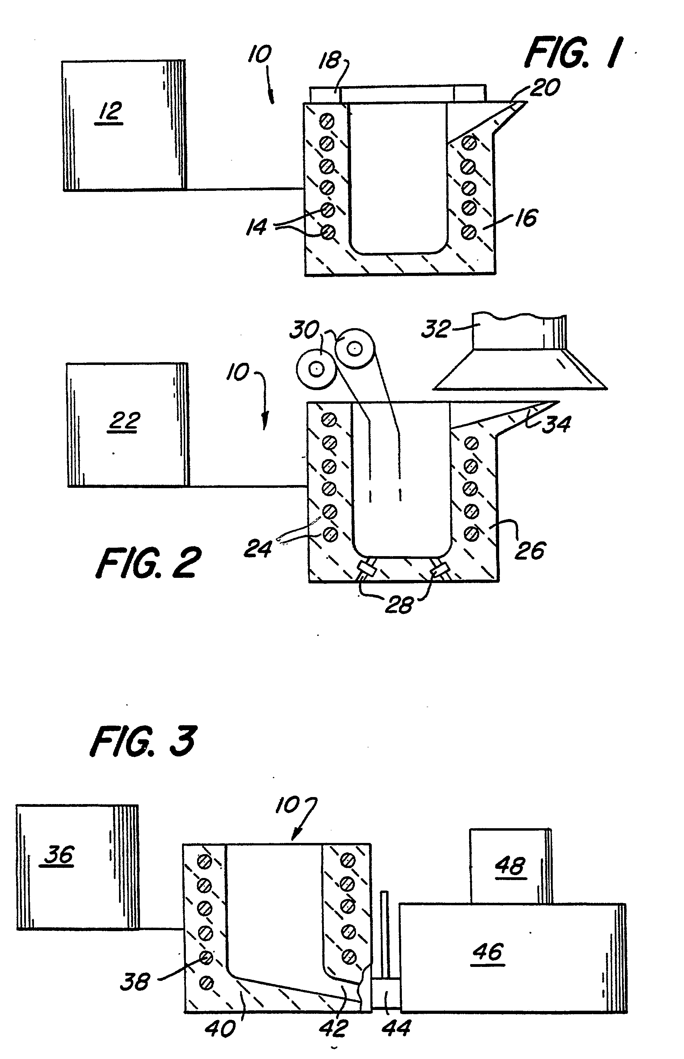

Referring to the drawings, wherein like numerals indicate like elements, there is shown in Figures 1-3 a first embodiment 10 of the method for refining steel utilizing induction melting furnaces sized for use in micro mills having a maximum production rate of about 50 tons per hour.

The term "pre-refined" steel is used herein to mean primarily "scrap" steel, but any steel could be used.

A medium frequency induction power supply 12 is operatively connected to the induction coils 14 in a basic melting furnace 16. The induction power supply 12 is well known in the art. For example see R.Q. Sharpless, "Efficient Batch Melting with Coreless Furnaces" Foundry Management & Technology, February, 1985. Induction coils 14 and furnace 16 are well known to those skilled in the art. Furnace 16 includes a fume ring 18 disposed on the upper surface of the furnace 16 and a spout 20. Pre-refined steel is charged into furnace 16 cold. The steel is then melted within the basic melting furnace 16. After complete melting of the pre-refined steel, it is transferred via spout 20 to a refining vessel 26.

An induction power supply 22 for stirring and superheating is operatively connected to the induction coils 24 of the refining vessel 26. The power supply 22 is disclosed in U.S. Patent No. 3,913,005. The stirring function is to ensure proper grain size and metallurgical characteristics. Induction coils 24 and vessel 26 are well known in the art. Refining vessel 26 includes means for introducing blasts of a gas 28, a spout 34, a degassing hood 32 and means for adding alloys and refining elements 30. Vessel 26 also has a high freeboard to allow for turbulence. Refining of the metal is performed in vessel 26.

The means for introducing blasts of a gas 28 include porous plugs or tuyeres, both of which are well-known to those skilled in the art. The means for introducing blast of a gas 28 are located in the lower portion of the vessel 26. The gas could be air, argon, nitrogen, carbon dioxide, etc.

Means for adding alloys and refining elements 30 are disclosed as a plurality of wire feed systems. Although this system is preferred, those skilled in the art realize that other such systems are available.

The degassing hood 32 is conventional and well-known to those skilled in the art.

After the refining operation is complete, molten metal from the refining vessel 26 is transferred via spout 34 to tundish 40.

An induction power supply for stirring and superheating 36 (see U.S. Patent No. 3,913,005) is connected to induction coils 38 of tundish 40 in a conventional manner. Coils 38 and tundish 40 are well known in the art. Tundish 40 includes a discharge port 42 which is located in the lower portion of tundish 40. Discharge port 42 is operatively connected to a ceramic gate valve 44. Ceramic gate valve 44 is provided for controlling the flow of molten metal from tundish 40. Valve 44 is well known in the art.

Ceramic gate valve 44 is operatively connected to a horizontal caster 46 with in-mold and post-mold induction stirring capability. Such horizontal casters are well known to those skilled in the art. For example, see M. Hassig of Steel Casting Engineering, Ltd., Orange, California, article entitled "Horizontal Continuous Casting... a technology for the future?..." presented September, 1983 to the Association of Iron and Steel Engineers. An induction power supply 48 for in-mold and post-mold stirring and superheating is operatively connected to the horizontal caster 44 in a conventional manner. Although the horizontal caster is preferred, those skilled in the art will understand that any further continuous casting step of steel could be performed at this step.

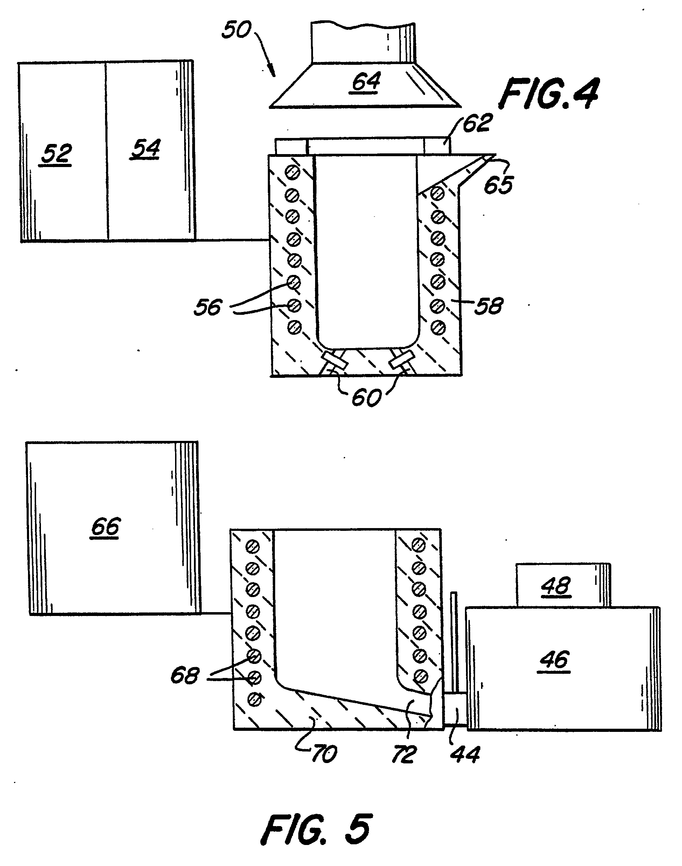

Referring to Figures 4-5, there is shown a second embodiment 50 of the method for refining steel utilizing an induction melting furnace sized for use in a micro mill having a maximum production rate of about 50 tons per hour.

An induction stirring power supply 52 and medium frequency induction power supply 54 are operatively connected to coils 56 of a combined melting and refining furnace 58 having high freeboard. Power supplies 52 and 54 are disclosed in U.S. Patent No. 3,913,005. Furnace 58 include a fume ring 62 located along the upper surface of furnace 58, means for introducing blasts of a gas 60, a degassing hood 64 and a spout 65. Pre-refined metal is charged into furnace 58 and melted and stirred. Optionally, alloy and refining elements can be charged into the furnace 58. The degassing hood 64 is disposed over the upper open end of furnace 58 and used in a conventional manner.

Means for introducing blasts of a gas 60 are the same as those described with regard to embodiment 10 set forth above. After metal has been refined in furnace 58, it is transferred to tundish 70.

Induction power supply 66 is operatively connected to coil 68 of tundish 70. Tundish 70 includes a discharge port 72 located in the lower portion thereof. A ceramic gate valve 44 is connected to the discharge port in a conventional manner. Horizontal caster 46 is preferably operatively connected to gate valve 44.

**Claims**

1. A method for refining steel utilizing induction melting furnaces sized for use in micro mills comprising the steps of:
   (a) charging a medium frequency induction melting furnace (16) having a maximum producton rate of about 50 tons per hour with pre-refined steel and melting the steel in the furnace;
   (b) transferring the melted steel to a refining vessel (26), the refining vessel (26) comprising a high freeboard, means (22, 24) for induction heating and stirring and means (28) for supplying blasts of a gas; and
   (c) transferring the refined material to a tundish (40) for a continuous casting operations.

2. The method according to claim 1 wherein said continuous casting operation is a horizontal casting operation (46).

3. The method according to claim 1 whereis said prerefined steel is scrap steel.

4. A method for refining steel utilizing an induction melting furnace sized for use in micro mills comprising the steps of:
   (a) charging a medium frequency induction melting/stirring furnace (58) having a maximum production rate of about 50 tons per hour with pre-refined steel and melting and stirring the steel in said furnace, said furnace comprises a vessel having a high freeboard, means (52, 54) for induction heating and stirring and means (60) for supplying blasts of a gas; and
   (b) transferring the refined metal to a tundish (70) for a continuous casting operations.

5. The method according to claim 4 wherein said continuous casting operation is a horizontal casting operation (46).

6. The method according to claim 4 wherein said prerefined steel is scrap steel.

**Patentansprüche**

1. Verfahren zum Stahlveredeln mittels Induktionsschmelzöfen, die zur Verwendung in kleinen Hüttenwerken bemessen sind, welches die Schritte umfaßt:
   (a) Beschicken eines Mittelfrequenz-Induktionsschmelzofens (16), der eine maximale Produktionsrate von ungefähr 50 Tonnen pro Stunde mit vorveredeltem Stahl besitzt und den Stahl in dem Ofen schmilzt.

(b) Überführen des geschmolzenen Stahles zu einem Frischgefäß (26), wobei das Frischgefäß (26) einen hohen Freibord, Mittel (22, 24) zum Induktionserwärmen und Umrühren und Mittel zum Einblasen eines Gases aufweist.

(c) Überführen des veredelten Materials zu einer Gießwanne (40) für einen Stranggußarbeitsgang.

2. Verfahren nach Anspruch 1, bei welchem der Stranggußarbeitsgang ein horizontaler Gußarbeitsgang (46) ist.

3. Verfahren nach Anspruch 1, bei welchem der vorveredelte Stahl Schrottstahl ist.

4. Verfahren zum Stahlveredeln mittels eines Induktionsschmelzofens, der zur Verwendung in kleinen Hüttenwerken bemessen ist, welches die Schritte umfaßt:

(a) Beschicken eines Mittelfrequenz-Induktionsschmelz-/Umrührofens (58) der eine maximale Produktionsrate von ungefähr 50 Tonnen pro Stunde mit vorveredeltem Stahl besitzt und den Stahl in dem Ofen schmilzt und umrührt, wobei der Ofen ein Gefäß mit einem hohen Freibord, Mittel (52, 54) zum Induktionserwärmen und Umrühren und Mittel (60) zum Einblasen eines Gases aufweist und

(b) Überführen des veredelten Metalles zu einer Gießwanne (70) für einen Stranggußarbeitsvorgang.

5. Verfahren nach Anspruch 4, bei welchem der Stranggußarbeitsvorgang ein horizontaler Gußarbeitsvorgang (46) ist.

6. Verfahren nach Anspruch 4, bei welchem der vorveredelte Stahl Schrottstahl ist.

**Revendications**

1. Procédé pour affiner l'acier, utilisant des fours de fusion à induction dimensionnés pour être utilisés dans des micro-aciéries, comprenant les étapes consistant:

(a) à introduire dans un four de fusion à induction moyenne fréquence (16), ayant un débit de production maximal d'environ 50 tonnes par heure, un acier pré-affiné, et à faire fondre l'acier dans le four;

(b) à transférer l'acier fondu dans un récipient d'affinage (26), le récipient d'affinage (26) comprenant un récipient comportant un franc-bord haut, un moyen (22, 24) pour le chauffage et l'agitation par induction, et un moyen (28) pour envoyer des vents d'un gaz; et

(c) à transférer le matériau affiné dans un panier de coulée (40) pour une opération de coulée continue.

2. Procédé selon la revendication 1, dans lequel ladite opération de coulée continue est une opération de coulée horizontale (46).

3. Procédé selon la revendication 1, dans lequel ledit acier pré-affiné est constitué de riblons d'acier.

4. Procédé pour affiner l'acier, utilisant un four de fusion à induction dimensionné pour être utilisé dans des micro-aciéries, comprenant les étapes consistant:

(a) à introduire dans un four à agitation/fusion par induction moyenne fréquence (58), ayant un débit de production maximal d'environ 50 tonnes par heure, un acier pré-affiné, et à faire fondre et agiter l'acier dans ledit four. Le four comprend un récipient comportant un franc-bord haut, un moyen de chauffage (52, 54) et d'induction par induction, et un moyen (60) pour introduire des vents d'un gaz; et

(b) à transférer le matériau affiné dans un panier de coulée (70) pour une opération de coulée continue.

5. Procédé selon la revendication 4, dans lequel ladite opération de coulée continue est une opération de coulée horizontale (46).

6. Procédé selon la revendication 4, dans lequel ledit acier pré-affiné est constitué de riblons d'acier.

FIG. 1

FIG. 2

FIG. 3

*50*

*64*

*52*  *54*

*62*

*65*

*56*  *58*

*60*

*FIG.4*

*66*

*48*

*46*

*68*

*70*  *72*  *44*

*FIG. 5*